Europäisches Patentamt

European Patent Office

Office européen des brevets

(19)

(11) **EP 1 392 109 B1**

(12) **EUROPEAN PATENT SPECIFICATION**

(45) Date of publication and mention
of the grant of the patent:
**17.08.2005 Bulletin 2005/33**

(51) Int Cl.7: **A01K 29/00, A01K 5/02**

(86) International application number:
**PCT/EP2002/006100**

(21) Application number: **02776513.0**

(22) Date of filing: **03.06.2002**

(87) International publication number:
**WO 2002/098213 (12.12.2002 Gazette 2002/50)**

(54) **METHOD AND SYSTEM FOR CONTROLLING BIORESPONSE OF LIVING ORGANISMS**

VERFAHREN UND SYSTEM ZUR STEUERUNG DER BIOLOGISCHEN REAKTION VON
LEBENDEN ORGANISMEN

PROCEDE ET SYSTEME DE CONTROLE DE LA REPONSE BIOLOGIQUE DES ORGANISMES
VIVANTS

(84) Designated Contracting States:
**AT BE CH CY DE DK ES FI FR GB GR IE IT LI LU
MC NL PT SE TR**

(30) Priority: **01.06.2001 GB 0113292**

(43) Date of publication of application:
**03.03.2004 Bulletin 2004/10**

(73) Proprietor: **KATHOLIEKE UNIVERSITEIT LEUVEN
3000 Leuven (BE)**

(72) Inventors:
• **BERCKMANS, Daniel, Albert
B-3010 Kessel-Lo (BE)**
• **AERTS, Jean-Marie
B-3053 Haasrode (BE)**
• **VRANKEN, Erik, Joannes, Matheus
B-3582 Beringen (BE)**

(74) Representative:
**Prins, Adrianus Willem, Mr. Ir. et al
Vereenigde,
P.O.Box 87930
2508 DH Den Haag (NL)**

(56) References cited:
**WO-A-95/08812            US-A- 4 517 923
US-A- 5 988 106**

**Description**

Field of the invention

The present invention relates to a method and a system for controlling dynamic bioresponse of living organisms, in particular biomass production of animals, towards a predefined value and/or along a predefined trajectory.

Background of the invention

In the bio-industry a need exists to be able to actively and accurately control the output of bioprocesses, such as the biomass production of an animal, in order to produce output that satisfies consumers' demand. An important bioprocess output is for instance the growth trajectory and final weight of living organisms, e.g. animals. Said growth trajectory and final weight, or more generally biomass production, can be influenced by one or more process inputs, such as feed quantity, quality and frequency (nutritional inputs) and/or temperature, humidity, light intensity and ventilation (micro-environmental inputs). Preferably, the desired bioprocess output is realized at minimum costs, thus with minimum input-effort. From an economic point of view feed intake is an important input to be minimized since it accounts for more then 70% of total production costs (Parkhurst, 1967; Ingelaat, 1997).

From US 4,517,923 a system is known, wherein an animal output parameter, such as its weight, is measured at regular time intervals and compared to a desired or predicted value or curve. The predicted curve is based on a general formula or empirical data and may be updated depending on the actual performance of the animal. Upon an observed variance between the predicted output and the actual output, an animal input parameter, e.g. the food supply, is adjusted. This adjustment is based on a static model, incorporated in stored data tables, providing a relationship between the relevant animal input (e.g. food) and output (e.g. weight gain).

Another way to control bioprocesses, such as the aforementioned growth or other biomass outputs is by applying model based control theory (Golten and Verwer, 1991; Camacho and Bordons, 1999). This requires the availability of a process model that allows to predict the dynamic response of the process output (the biomass) to one or more process inputs (the before-mentioned nutritional and/or micro-environmental inputs). For implementation in practice, such a process model should be compact and accurate.

In literature many models have been disclosed which describe the growth response of animals in general (Bertalanffi, 1938; Brody, 1945; Emmans, 1981; Kirkwood and Webster, 1984; Moore, 1985; Emmans, 1994) and of broilers in particular (Hurwitz et al., 1978; Timmons and Gates, 1988; Fattori et al., 1991; Cooper and Washburn, 1998). These models are basically mechanistic models describing the dynamic response, in particular the growth process, based on physiological and biochemical laws, resulting in complex models, existing of many equations and model parameters (Bruce and Clark, 1979; Oltjen et al., 1986). Such models are excellent for gaining insight, transfer of scientific knowledge and for simulation of processes, but for control purposes in practice they are too complex and too inaccurate (Oltjen et al., 1986).

Beside mechanistic models, also empirical (non-linear) models are found in literature describing growth processes. These models are mainly the result of a non-linear regression analysis applied to growth data (Brody, 1945; Fitzhugh, 1976). The advantages of such models are that they are accurate and have not such a complex structure. However, the models are estimated off-line (after all data are gathered) and usually only take into account the process output (weight as a function of time). Feed intake is not taken into account as a process input. This makes these known models less useful for control purposes.

It is an object of the invention to provide a method for monitoring and control bio-response of living organisms. More particularly it is an object of the invention to use less complex models and modelling techniques to model the dynamic response of a bioprocess output (biomass) to one or more process inputs.

Summary of the invention

The present invention describes a method for monitoring and controlling bio-response of living organisms characterized by the features of claim 1.

The use of a data based on-line modelling technique, based on real-time information, measured dynamically on inputs and outputs of the bioprocess offers the advantage that such models can have a simple structure, yet surprisingly enable accurate prediction of the dynamic behaviour of complex bioprocesses. Thanks to their simple structure, said models can be readily implemented in process control means, at commercially acceptable costs.

In this description on-line modelling at least refers to techniques where a model of the process is identified as the input-output data of the process become available. Synonyms are real-time identification and recursive identification (Ljung, 1987. System Identification: theory for the user, p. 303-304, New Jersey: Prentice Hall). With these modelling techniques the model parameters of a mathematical model structure are estimated, based on on-line measurements of the process inputs and outputs. This parameter estimation can be performed recursively during the process resulting in a dynamic model with time-variant model parameters that can cope with the dynamic behaviour of most bioprocesses (Ljung, 1987; Goodwin and Sin, 1984).

This dynamic model can subsequently be used to estimate and predict the process output several time steps ahead. These predictions can be compared to actual measured output values and a predefined, reference output, based on which comparison a suitable control strategy can be determined, to control the input of the process such as to achieve the predefined output trajectory, preferably with a minimum of input effort.

One way to on-line model the dynamic responses of a bioprocess with time-variant characteristics according to the present invention is by applying recursive linear regression. Such approach offers the advantage that, although it is based on a simple model structure, it can cope with non-linear characteristics of processes by estimating the model parameters each time new information is measured on the process. Furthermore the model structure can cope with multiple process inputs and/or multiple process outputs.

The recursive modelling technique according to the invention requires on-line measured input-output information of the process. For instance, when applied to animal growth processes, on-line information regarding animal weight and feed supply has to be made available. From practice systems are known which can measure the required information automatically. However, it is also known that such automatic measurement systems may sometimes yield incorrect measurement values, for instance due to irregular visiting patterns of the animals visiting the measurement equipment. In order to prevent such incorrect measurements from affecting the model accuracy, a method according to the invention is preferably provided with features to evaluate incoming measurements and reject or adapt said measurements in the event inconsistencies are detected. For the evaluation of the measured output data, effective use can be made of the model. For instance, the predicted average output of said model can be used to evaluate the validity of measured output values.

The invention furthermore relates to a system, which adjusts the inputs of a bio-process, in particular animal biomass production, in order to guide the output of the bio-process, e.g. the biomass production, towards a preset reference bio-response using a method according to the invention. This system comprises a means for real-time collecting and storing information on bio-process inputs, for instance feed quantity, and outputs, for instance body weight, a means for generating the predicted bio-process using said information, a means for comparing and determining the variance between the predicted bio-response and the predefined reference bio-response and means for adjusting the bio-process inputs in relationship to the variance.

Thanks to the compactness of the model according to the invention, said model can be easily implemented on a chip, which chip can be attached to an individual animal, preferably together with one or more appropriate sensors for measuring the animal production inputs and outputs and communication means for communicating with input adjusting means. In this way, the production output or well-being of single animals can be optimally controlled, preferably with a minimum or most efficient use of available inputs, using a modelling technique and model predictive control strategy according to the invention.

Brief description of the drawings and pictures

To explain the invention, exemplary embodiments of a method and system according to the invention will hereinafter be described with reference to the accompanying drawings, wherein:

Fig. 1 represents a block diagram illustrating the general structure of an adaptive control scheme according to the invention;
Fig. 2 shows an example of the rectangular window approach;
Fig. 3 shows a scheme of the different calculation blocks and the coupling between growth control and monitoring, wherein the respective blocks represent:

Block 1: the recursive parameter estimation;
Block 2: Calculation of the step response $\gamma(t)$;
Block 3: Calculation of the step response matrix G;
Block 4: Calculation of K;
Block 5: Calculation of the free response f;
Block 6: Calculation of the control input for t+1;
Block 7: Prediction of process output k steps ahead;
Block 8: Determination of lower threshold and upper threshold; and
Block 9: Estimation of average weight of group animals.

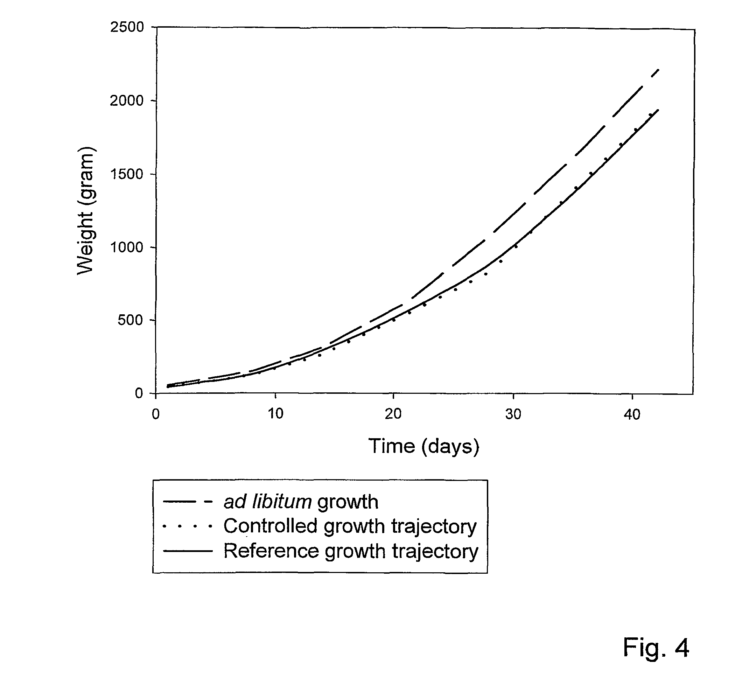

Fig. 4 shows the growth trajectory (average body weight as a function of time) of ad libitum fed chickens, as compared to a growth trajectory which was controlled towards a predefined reference weight trajectory with a method according to the present invention; and

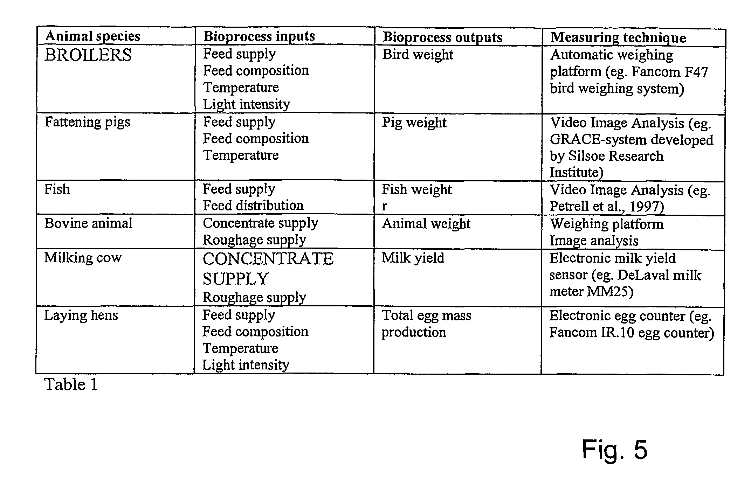

Fig. 5 represents a table of suitable input-output combinations, for various bioprocesses, and available suitable measurement techniques.

## Detailed description of the invention

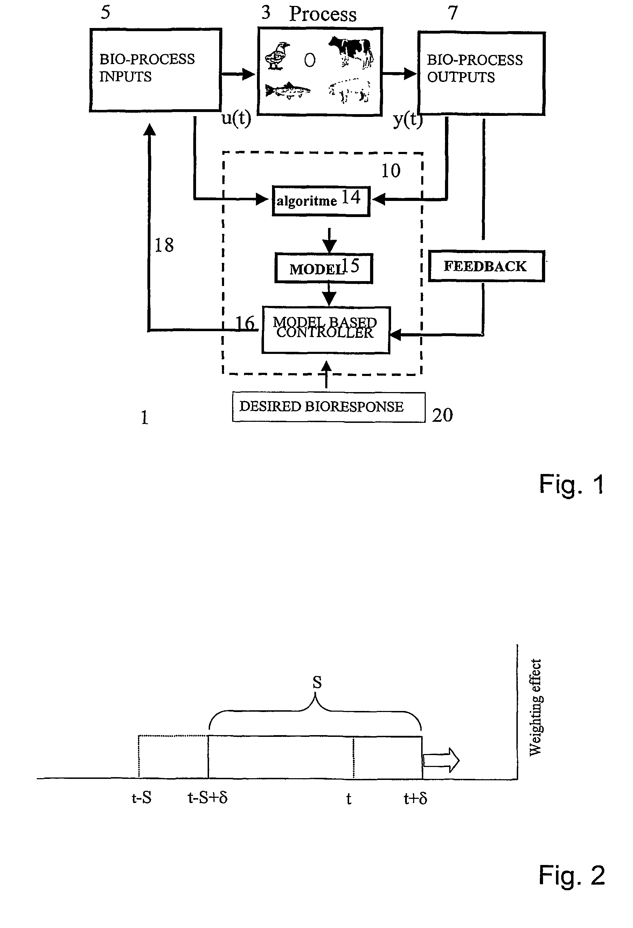

Figure 1 shows schematically a system 1 according to the invention, for monitoring and controlling bio-response of a bio-process 3, using an on-line data based modelling technique and real-time information measured on selected inputs $u_i(t)$ and outputs $y(t)$ of the bio-process 3.

In this description the term bio-process 3 should be understood to comprise biomass production activity of living organisms, in particular animals. The output $y(t)$ of the bioprocess 3 may include biomass production (e.g. body weight, egg mass, milk yield), biomass composition (e.g. meat/fat ratio, meat quality, milk quality, carcass composition) and waste production (like manure production, manure composition, ammonia emission).

The inputs $u_i(t)$ of the bioprocess 3 include factors which can affect the course of the bio-process 3 and which therefore constitute suitable instruments to control the outputs $y(t)$ of the bio-process 3 towards a predefined, desired value, preferably along a predefined reference trajectory. The inputs $u_i(t)$ can for example include nutritional inputs such as the feed quantity, feed composition, feeding strategy (e.g. feed frequency), water supply and/or micro-environmental inputs like temperature, humidity, ventilation and light intensity.

The system 1 comprises input control means 5 for measuring and adjusting one or more selected inputs $u_i(t)$ to the bio-process 3, output measurement means 7 for measuring one or more selected outputs $y(t)$ of the bio-process 3. The system 1 furthermore comprises a computing means 10, connected to said input control means 5 and said output measurement means 7. The computing means 10 is provided with an algorithm 14, for on-line generating a dynamic model 15 of the bio-process 3, based on real-time measurements of the or each input $u_i(t)$ and output $y(t)$ received from said input control means 5 and output measurement means 7. An example of a suitable on-line modelling algorithm will be discussed in more detail below.

The computing means 10 furthermore comprises an algorithm 16, for calculating a control action 18, which indicates how the or each input $u_i(t)$ should be adjusted in order to obtain the desired output $y(t)$. The calculation of the control action 18 is based on predicted process output values generated by the model 15, which are compared to actual process output values measured by the measurement means 7 and a predefined, desired bio-response 20. Based on the comparison, the control algorithm 16 will calculate how the input $u_i(t)$ should be adjusted in order to obtain the desired output $y(t)$. The algorithm offers the possibility of optimising the inputs $u_i(t)$, so that a desired output $y(t)$ can be achieved with minimum input effort. Underlying mathematical equations for calculating the control action 18 will be discussed in more detail below. The calculated control action 18 is subsequently used to operate the input control means 5, resulting in an adjustment of the input $u_i(t)$.

The predefined bio-response 20 can be a desired end value and/or a trajectory leading up to said end value. Said predefined bio-response may be adapted during the process 3. To that end, the computing means 10 can be provided with suitable entry means (not shown), such as a keyboard.

The inputs $u_i(t)$ and outputs $y(t)$ can be measured with suitable sensors. The selected inputs will depend on the output to be controlled. Subsequently, the techniques for measuring said inputs and outputs may differ. Figure 5 represents a table giving an overview of suitable control inputs $u_i(t)$, as well as suitable measurement techniques for different animal species and different bioprocess outputs to be controlled (e.g. body weight, milk yield, egg mass).

Depending on the field of application, the measured in- and outputs can be averaged values, representing an average quantity of a group of animals. However the in- and outputs can also be measured on individual animals, in which case individual models can be generated for every single animal. In that case, each animal can for instance be provided with a chip and suitable measurement sensor, which can be attached to for instance an ear tag or collar. The chip may contain the algorithms 14 and 16 to estimate the model and generate an appropriate control strategy. Furthermore a receiver and transmitter can be provided for communication with input control means 5, for instance a feeding apparatus.

## Modelling of biomass production to production inputs

In the following the mathematical technique for modelling the bioprocess 3 will be described in more detail. This modelling technique estimates model parameters $\theta_i(t)$ of a mathematical model structure, based on on-line measurements of one or more inputs $u_i(t)$ and outputs $y(t)$ of the bioprocess 3 to be controlled. The estimation of the model parameters $\theta_i(t)$ is performed recursively during the process resulting in a dynamic model 15 with time-variant model parameters that can cope with the dynamic behaviour of animal biomass production. Typically such a model comprises following elements:

a mathematical relation between a selected output y(t) and input $u_i$(t) of the bioprocess 3, denoted as:

$$y(t) = \theta_1(t) + \theta_2(t)u_1(t) + \dots + \theta_{N+1}u_N \qquad (1)$$

with $\theta_1$(t), $\theta_2$(t), ..., $\theta_{N+1}$(t) representing the model parameters estimated at time t. Note that this relation may be non-linear and may have several inputs ($u_i$(t)). In matrix notation equation (1) can be written as:

$$y(t) = \underline{a}(t)\underline{x}(t) \qquad (2)$$

with $\underline{a}(t) = \lfloor \theta_1(t)\ \theta_2(t)\ \dots\ \theta_{N+1}(t) \rfloor$; $\underline{x}(t) = [1\ u_1(t)\ \dots\ u_N(t)]^T$,

Next, the parameters $\theta_i$(t) of equation (1) are estimated recursively using a moving rectangular window approach (illustrated in figure 2) with overlapping intervals of length S. On every time instant t, the parameters $\theta_i$(t) are estimated, based on measured input and output information during a time window of S samples. The estimation comprises following steps at each recursion (Young, 1984):

receipt of new data at t-th instant

$$\underline{\hat{a}}^{'}(t) = \underline{\hat{a}}(t-1) - P(t-1)\underline{x}(t)\left(\underline{x}(t)^T P(t-1)\underline{x}(t) + 1\right)^{-1}\left(\underline{x}(t)^T \underline{a}(t-1) - y(t)\right) \qquad (3)$$

$$P^{'}(t) = P(t-1) - P(t-1)\underline{x}(t)\left(\underline{x}(t)^T P(t-1)\underline{x}(t) + 1\right)^{-1}\underline{x}(t)^T P(t-1) \qquad (4)$$

removal of data received at (t-S)-th interval.

$$\underline{\hat{a}}(t) = \underline{\hat{a}}^{'}(t) - P^{'}(t)\underline{x}(t-S)\left(\underline{x}(t-S)^T P^{'}(t)\underline{x}(t-S) - 1\right)^{-1}\left(\underline{x}(t-S)^T \underline{a}^{'}(t) - y(t-S)\right) \qquad (5)$$

$$P(t) = P^{'}(t) - P^{'}(t)\underline{x}(t-S)\left(\underline{x}(t-S)^T P^{'}(t)\underline{x}(t-S) - 1\right)^{-1}\underline{x}(t-S)^T P^{'}(t) \qquad (6)$$

where $\underline{\hat{a}}(t)$ is the estimate of the parameter vector $\underline{a}(t)$ at time t; $\underline{x}(t)$ is defined as in equation (2); S is the size of the rectangular window; P is a square matrix which is initialised at

$$P = \begin{bmatrix} 10^4 & 0 & \dots & 0 \\ 0 & 10^4 & \dots & 0 \\ \dots & \dots & \dots & \dots \\ 0 & 0 & \dots & 10^4 \end{bmatrix}$$

Predictions of the biomass output are generated in a recursive way. On each time instant t the parameters $\theta_i$(t) of equation (1) are estimated based on the measured process output and inputs in a time window of S time units (from time unit t-S+1 until time unit t). In a next step, the process output is predicted F steps ahead (time unit t+F) by using equation (1) with $u_i$(t+F), wherein F will be called the prediction horizon. On time unit t+1 the procedure is repeated.

So, based on the measured information in a time window ranging from t-S+2 until t+1, the model parameters $\theta_i$(t+1) are estimated and biomass production is predicted F days ahead (time unit t+1+F) by applying the input $u_i$(t+1+F) to the estimated model. In this way the process output (biomass production) is predicted at each time instant on the basis of a limited window of actual and past data.

The optimum values for the window length S and prediction horizon F will be different for every process to be modelled. The optimum values can for example be determined by evaluating the accuracy of the model predictions for various combinations of window length S and prediction horizon F and by selecting the combination for which the prediction error remains below a specified, acceptable value, for instance below 5%.

Based on the predictions of the recursive modelling technique, algorithms can be developed to control the biomass trajectory.

Model-based control of the biomass trajectory

In order to obtain a suitable control algorithm, model predictive control (MPC) makes use of an objective function J. The general aim is that the future process output (y(t)) on the considered horizon F should follow a determined reference signal (r(t)) and, at the same time, the control effort ($\Delta$u) necessary for doing so should be penalized. The general expression for such objective function is (Camacho and Bordons, 1999):

$$J\left(N_1, N_2, N_u\right) = \sum_{F=N_1}^{N_2} \delta(F)\left[\hat{y}(t+F \mid t) - r(t+F)\right]^2 + \sum_{F=1}^{N_u} \lambda(F)\left[\Delta u(t+F-1)\right]^2 \qquad (7)$$

where $N_1$ is the minimum cost horizon; $N_2$ is the maximum cost horizon; $N_u$ is the control horizon, $\hat{y}(t+F|t)$ is the predicted value of the process output y on time instant t, F time steps ahead; r(t+F) is the value of the reference trajectory on time instant t+F; $\Delta$u(t+F-1) is the change of the control input on time instant t+F-1; $\delta$(j), $\lambda$(j) are weighing coefficients.

The following examples will further explain the invention.

Example 1: Control of the weight trajectory of growing chickens

5800 chickens (Ross 308, mixed) were divided into two groups of 2900 animals each. One group was fed ad libitum, while the amount of feed supplied to the animals of the second group was controlled, using the data based on-line modelling technique according to the present invention, in order to guide the weight trajectory towards the predefined reference growth trajectory. Being able to guide the weight trajectory offers the possibility to select a trajectory that offers optimum results for specific, predetermined criteria. For instance one could select a trajectory that leads to maximum growth in a minimum time frame or with minimum input (feed). One could also choose to maximise the animals well being and thus minimise production loss. Other criteria to be optimised can be for instance a minimum of manure production or a favourable meat/fat ratio. Also, by controlling the input, waste of input can be avoided.

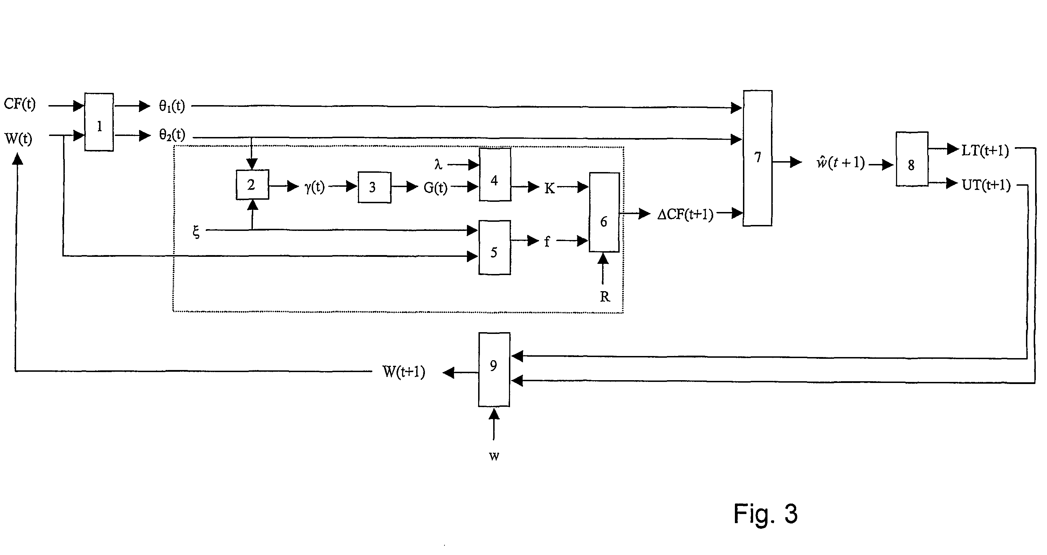

The weight of the animals was determined using an automatic weighing platform (Fancom 747 bird weighing system) with a diameter of 0.24 m. Water and food was provided by means of an automatic drinking feeding system (Roxell). Feed intake and average weight of the animals was determined on a daily basis. Calculations were performed on a Pentium II (200 MHz). The method used to model and control the weight trajectory is described in detail below, whereas a block diagram of the model used is shown in figure 3.

Figure 4 presents the evolution in time of the average body weight of the animals in the two experimental groups as compared to the predefined reference weight trajectory. The body weight of the animals in the ad libitum fed group increased clearly faster than in the preset growth trajectory, while the weight trajectory of the controlled group coincided with the reference trajectory.

In order to model the growth response to feed supply, cumulative feed intake was chosen as input instead of the daily feed intake, since the trajectory of weight as a function of cumulative feed intake is much more damped (smooth) than the trajectory of weight as a function of feed intake (Fitzhugh, 1976). In the reported research, it is assumed that the relation between cumulative feed intake and weight, which is non-linear (Brody, 1945; Fitzhugh, 1976; Parks, 1982), can be described by recursive linear relations between both variables. So, on each discrete time instant k the following linear relation can be written (see block 1, fig. 3):

$$\hat{W}(t) = \theta_1(t) + \theta_2(t)CF(t) \qquad (1)$$

where W(t) is the measured weight (kg) of the animals at time t; CF(t) is the measured cumulative feed intake in kg at time t; $\theta_1(t)$(kg) and $\theta_2(t)$(kg/kg) are the model parameters estimated at time t (days). The parameter $\theta_2(t)$ more specifically, is the feed efficiency at time t (defined as change of bird weight per change of feed intake). The parameter $\theta_1(t)$ at the start of the experiment, day 1, equals the body weight of the day-old chick. In matrix notation this can be written as:

$$\hat{W}(t) = \underline{a}(t)\underline{x}(t) \tag{2}$$

with $\underline{a}(t) = [\theta_1(t)\ \theta_2(t)]$; $\underline{x}(t) = [1\ CF(t)]^T$, the superscript T meaning the transpose of a matrix.

At each recursion, using a moving rectangular window approach as described above, the estimation consists of the following steps:

receipt of new data at t-th instant

$$\hat{\underline{a}}'(t) = \hat{\underline{a}}(t-1) - P(t-1)\underline{x}(t)\left(\underline{x}(t)^T P(t-1)\underline{x}(t)+1\right)^{-1}\left(\underline{x}(t)^T \underline{a}(t-1) - w(t)\right) \tag{3}$$

$$P'(t) = P(t-1) - P(t-1)\underline{x}(t)(\underline{x}(t)^T P(t-1)\underline{x}(t)+1)^{-1}\underline{x}(t)^T P(t-1) \tag{4}$$

removal of data received at (t-S)-th interval.

$$\hat{\underline{a}}(t) = \hat{\underline{a}}'(t) - P'(t)\underline{x}(t-S)\left(\underline{x}(t-S)^T P'(t)\underline{x}(t-S)-1\right)^{-1}\left(\underline{x}(t-S)^T \underline{a}'(t) - w(t-S)\right) \tag{5}$$

$$P(t) = P'(t) - P'(t)\underline{x}(t-S)(\underline{x}(t-S)^T P'(t)\underline{x}(t-S)-1)^{-1}\underline{x}(t-S)^T P'(t) \tag{6}$$

where $\hat{\underline{a}}(t)$ is the estimate of the parameter vector $\underline{a}(t)$ at time t and in the given example $\hat{\underline{a}}(t) = [40\ 0.8]$ at t = 0; $\underline{x}(t)$ is defined as in equation (2); P is a square matrix which is initialized at $[10^4\ 0;0\ 10^4]$; S is the size of the rectangular window.

On each time instant (day) t the parameters $\theta1(k)$ and $\theta2(k)$ of equation (1) are estimated based on the measured values of weight and cumulative feed intake during a time window of S=5 days (from day t-S+1 until day t). In a next step, the weight is predicted F= 4 steps ahead (day t+F) by using equation (1) with CF(t+F). On day t+1 the procedure is repeated.

The window length S=5 and prediction horizon F=4 were determined by applying the recursive estimation algorithm with different window sizes, ranging from three to seven days and different prediction horizons, ranging from one to seven days. As a result, for each data set 35 (5 x 7) combinations of window size and prediction horizon were used to model the growth response. It could be demonstrated that the prediction error stayed below 5 % when a window size S of 5 days was used and the prediction horizon did not exceed 4 days.

Based on abovementioned predictions a control algorithm was developed to control the growth trajectory and to monitor the time course of the animals' weight, using before-mentioned objective function:

$$J\left(N_1, N_2, N_u\right) = \sum_{F=N_1}^{N_2} \delta(F)\left[\hat{y}(t+F\,|\,t) - r(t+F)\right]^2 + \sum_{F=1}^{N_u} \lambda(F)\left[\Delta u(t+F-1)\right]^2 \tag{7}$$

where $N_1$ is the minimum cost horizon; $N_2$ is the maximum cost horizon; $N_u$ is the control horizon, $\hat{y}(t+F|t)$ is the predicted value of the process output y on time instant t, F time steps ahead; r(t+F) is the value of the reference trajectory on time instant t+F; $\Delta u(t+F-1)$ is the change of the control input on time instant t+F-1; $\delta(j)$, $\lambda(j)$ are weighing coefficients.

For the present example the objective function can be more specifically written as:

$$J(1,4,4) = \sum_{j=1}^{4} \left[ \hat{W}(t+F \mid t) - r(t+F) \right]^2 + \sum_{j=1}^{4} \lambda(F) \left[ \Delta CF(t+F-1) \right]^2 \tag{8}$$

where $\hat{W}(t + F|t)$ is the predicted weight of the group animals and CF is the cumulative feed supply.

Typically for MPC (model predictive control) is to separate the process response into a free and a forced response. The free response corresponds to the evolution of the process due to its present state, while the forced response is due to the future control moves. For the considered process, the weight can be predicted 1 step ahead using the following equation:

$$\hat{W}(t + 1) = W(t)(1 - \xi) + \gamma(t)\Delta CF(t + 1) \tag{9}$$

where $W(t)(1 - \xi)$ is the free response and $\gamma(t)\Delta CF(t + 1)$ is the forced response. Based on experiments, the value of the parameter $\xi$ was estimated. The value of $\xi$ ranges between 0.04 and 0.1. The parameter $\gamma(t)$ can be expressed as function of $\theta_2(t)$ as (see block 2, fig. 3):

$$\gamma(t) \approx \theta_2(t) + \frac{\xi w(t - 1)}{\Delta CF(t)} \tag{10}$$

For predictions up to 4 days (F = 4), the weight can be predicted as follows:

$$\hat{W}(t + F) = W(t)(1 - F\xi) + \sum_{F=1}^{4} \gamma(t)\Delta CF(t + F) \tag{11}$$

In matrix notation this can be written as:

$$
\begin{bmatrix}
\hat{W}(t+1) \\
\hat{W}(t+2) \\
\hat{W}(t+3) \\
\hat{W}(t+4)
\end{bmatrix}
=
\begin{bmatrix}
w(t)(1-\delta) \\
w(t)(1-2\delta) \\
w(t)(1-3\delta) \\
w(t)(1-4\delta)
\end{bmatrix}
+
\begin{bmatrix}
\gamma(t) & 0 & 0 & 0 \\
\gamma(y) & \gamma(t) & 0 & 0 \\
\gamma(t) & \gamma(t) & \gamma(t) & 0 \\
\gamma(t) & \gamma(t) & \gamma(t) & \gamma(t)
\end{bmatrix}
\begin{bmatrix}
\Delta CF(t+1) \\
\Delta CF(t+2) \\
\Delta CF(t+3) \\
\Delta CF(t+4)
\end{bmatrix}
\tag{12}
$$

or more compact as

$$\hat{W} = f + G\Delta CF \tag{13}$$

where f is the free response (block 5, fig. 3):

$$
f =
\begin{bmatrix}
W(t)(1-\delta) \\
W(t)(1-2\delta) \\
W(t)(1-3\delta) \\
W(t)(1-4\delta)
\end{bmatrix}
\tag{14}
$$

and G is the step response matrix (block 3, fig. 3).

$$G = \begin{bmatrix} \gamma(t) & 0 & 0 & 0 \\ \gamma(t) & \gamma(t) & 0 & 0 \\ \gamma(t) & \gamma(t) & \gamma(t) & 0 \\ \gamma(t) & \gamma(t) & \gamma(t) & \gamma(t) \end{bmatrix} \qquad (15)$$

By substituting equation (13) into the objective function J (equation (8)) and making the gradient of J equal to zero (under assumption that there are no constraints on the control signal) this leads to

$$CF = (G^T G + \lambda I)^{-1} G^T (r - f) \qquad (16)$$

Predictive control uses the receding horizon principle. This means that after computation of the optimal control sequence, only the first control will be implemented, subsequently the horizon is shifted one sample and the optimisation is restarted with new information of the measurements. So, the actual control signal that is sent to the process is the first element of the vector CF and is given by (block 6, fig. 3):

$$\Delta CF(t + 1) = K(r - f) \qquad (17)$$

where $\Delta CF(t+1)$ is the feed that has to be supplied to the animals on time $t$ and that is available until time $t+1$; $K$ is the first row of matrix $(G^T G + \lambda I)^{-1} G^T$ (block 4, fig. 3).

From research it is known that automatic weighing of chickens may yield different results than when weighing manually. This difference is especially encountered near the end of the production period. The difference is explained (Blokhuis, et al., 1988), by assuming that the weighing system is less visited by heavier birds at the end of the production period. This is confirmed by experience of Klein Wolterink, et al., (1989). In the present example, this problem was solved in the following way.

The on-line estimated relation between the cumulative feed supply CF and the weight W of the animals was used as a basis for optimising the estimation of the average weight of the group animals. Each time instant t the weight can be predicted one step ahead by using the following equation (block 7, fig. 3)

$$\hat{W}(t + 1) = \theta_1(t) + \theta_2(t) CF(t + 1) \qquad (18)$$

where $\theta 1(t)$ and $\theta 2(t)$ are the recursive estimated model parameters as described previously (equation 3-6); CF (t+1) is the cumulative feed supply CF(t) plus the calculated control input $\Delta CF(t+1)$.

Based on the predicted weight $W(t + 1)$, lower and upper threshold values LT(t) and UT(t) can be calculated (block 8, fig. 3):

$$LT(t + 1) = \hat{W}(t + 1) - \psi_L \hat{W}(t + 1) \qquad (19)$$

$$UT(t + 1) = \hat{W}(t + 1) + \psi_U \hat{W}(t + 1) \qquad (20)$$

wherein values for $\psi_L$ range between 0.3 and 0.15 and values for $\psi_U$ range between 0.3 and 0.4. These values have been determined, based on experimental data.

These threshold values are used to accept (or reject) the on-line measured weight values w. Since the distribution of the accepted values is biased (especially during the second half of the production period), the estimation of the average weight of the group is not based on the simple average, but on a corrected average. In order to calculate the corrected average, the accepted measured weight values w are divided into n equal classes.

$$\text{For } cl = 1 \rightarrow n, \ w = w_{cl} \Leftrightarrow w \in [LT + (cl - 1).CW, LT + cl.CW\rangle$$

The width of these classes, CW, is calculated as (block 9, fig. 3)

$$CW(t + 1) = \frac{(UT(t + 1) - LT(t + 1))}{n} \qquad (21)$$

Due to the fact that the lighter animals visit the weighing platform more frequently during the second half of the production period, the distribution is not normal (in statistical terms). In order to normalize the distribution, the weights in each class are averaged and multiplied by a weighing factor wf. In case that n = 10, the used weighing factors are:

wf1 = wf10 = 0.006
wf2 = wf9 = 0.026
wf3 = wf8 = 0.077
wf4 = wf7 = 0.165
wf5 = wf6 = 0.226

The average weight of the group animals is calculated by using the following equation:

$$W(t + 1) = \frac{\sum_{cl=1}^{n} w_{cl} \cdot wf_{cl}}{\sum_{cl=1}^{n} wf_{cl}} \qquad (22)$$

where $w_{cl}$ is the average weight of class cl; and $wf_{cl}$ is the weighing factor wf applied to class cl.
In contrast with the available algorithms for estimation of animals' weights with an automatic weighing platform, the method described here, does not need a priori knowledge, but is only based on measured information of the process.
In Figure 3 a scheme of the previously described calculations and the coupling between controlling and monitoring of growth is shown.

Example 2: Control of the growth of pigs

The method using the data based on-line modelling technique can also be applied to monitor and control the weight trajectory of growing pigs. The production inputs to be used are preferably selected out of the group comprising feed supply, feed composition and temperature. The production output parameter can either be the average pig weight or the individual pig weight. There are several methods to accurately measure the individual weight of pigs in a stable, in a preferred embodiment this is done using Video Imaging.

Example 3: Control of the growth of fish

The method using the data based on-line modelling technique can also be applied to monitor and control the weight trajectory of growing fish. The production input or inputs to be used are preferably selected out of the group comprising feed supply, feeding frequency and water temperature. The preferred production output parameter is the average body weight of the fish. There are several methods to accurately measure the average weight of fish swimming in a tank, in a preferred embodiment this is done using Video Imaging.

Example 4: Control of the growth of Bovine animals

The method using the data based on-line modelling technique can also be applied to monitor and control the weight trajectory of growing bovines. The production inputs to be used are preferably selected out of the group comprising feed supply and feed composition, in a more preferred embodiment the production inputs used are concentrate and roughage supply. The preferred production output parameter is the individual body weight of the bovines. There are several methods to accurately measure the individual weight of bovines, in a preferred embodiment this is done using a Weighing platform.

Example 5: Control of the milk production of lactating cows

The method using the data based on-line modelling technique can also be applied to monitor and control the milk production of lactating cows. The production inputs to be used are preferably selected out of the group comprising feed supply and feed composition, in a more preferred embodiment the production inputs used are concentrate and roughage supply. The preferred production output parameter is the cumulative milk production of the bovines. There are several methods to accurately measure the milk production, in a preferred embodiment this is done using an electronic milk yield sensor, f;ex; Delaval milk meter MM25.

Example 6: Control of the egg production of laying hens

The method using the data based on-line modelling technique can also be applied to monitor and control the egg production of laying hens. The production inputs to be used are preferably selected out of the group comprising feed supply, feed composition, temperature and light intensity. The preferred production output parameter is the cumulative egg mass production. There are several methods to accurately measure the egg mass production, in a preferred embodiment this is done using an electronic egg counter, f;ex; Fancom IR.10 egg counter.

Example 7: Control of protein and fat growth

By applying the data based modelling technique, it is also possible to monitor and control the protein and fat growth of animals (e.g. broilers, pigs). Based on measured data of animal weight, feed (energy) intake and estimated heat loss, it can be calculated how much protein and fat an animal is gaining per unit of time. The considered process outputs are protein and fat gain per time unit, the process inputs to be used are feed quantity and feed composition (quality). For the measurement of feed supply and animal weight commercial systems are available. Heat loss of animals can be estimated based on measurement of air temperature, air velocity, air humidity, radiant temperature of the environment and surface temperature of the animal.

The invention is by no means limited to the examples given in the description and the drawings. Many variations thereto are possible and understood to fall within the framework of the invention as defined in the appended claims.

**REFERENCES**

Anonymous. 1982. Live bird weighing simplified. *Poultry International*, 6:44-50.

Åstrøm K.J. 1985. Process control-Past, present, and future. *IEEE Control Systems Magazine* 5(3): 3-10.

Bakker H.K., Struikenkamp R.S., and De Vries G.H. 1980. Dynamics of ventilation, heart rate and gas exchange: sinusoidal and impulse work loads in man. *Journal of Applied Physiology: Respirat. Environ. Exercise Physiol.* 48(2): 289-301.

Berckmans D., and Goedseels V. 1986. Development of new control techniques for heating and ventilation of livestock buildings. *Journal of Agricultural Engineering Research* 33: 1-12.

Blokhuis H.J., Van Der Haar J.W. & Fuchs J.M.M. 1988. Do weighing figures represent the flock average? *Poultry International* 4(5): 17-19.

Brody S. 1945. *Bioenergetics and growth.* New York: Reinhold Publ. Co.

Bruce J.M., and Clark J.J. 1979. Models of heat production and critical temperature for growing pigs. *Animal Production* 28: 353-69.

Camacho E.F., and Bordons C. 1999. *Model predictive control.* Berlin: Springer-Verlag.

Cooper M.A., and Washburn K.W. 1998. The relationship of body temperature to weight gain, feed consumption, and feed utilization in broilers under heat stress. *Poultry Science* 77: 237-42.

Emmans G.C. 1981. A model of the growth and feed intake of ad libitum fed animals, particularly poultry. In *Computers in Animal Production. Occasional publication No. 5.* Eds. Hillyer G.M., Whittemore C.T., and Gunn R.G., 103-10. Edinburgh: The Edinburgh School of Agriculture.

Emmans, G. C. 1994. Effective energy: A concept of energy utilization applied across species. *British Journal of Nutrition* 71: 801-21.

Fattori T.R., Hildebrand P.E., and Wilson H.R. 1991. Response of broiler breeder females to feed restriction below recommended levels. 2.Economic Analysis. *Poultry Science* 70(3): 489-98.

Feighner S.D., Godowsky E.F. & Miller B.M. 1986. Portable microcomputer-based weighing systems: Applications in poultry science. *Poultry Science* 65: 868-873.

Fitzhugh H.A. 1976. Analysis of growth curves and strategies for altering their shape. *Journal of Animal Science* 42(4): 1036-51.

Golten J., and- Verwer A. 1991. *Control system design and simulation.* London: McGraw-Hill.

Goodwin G.C., and Sin K.S. 1984. *Adaptive filtering, prediction and control.* New York: Prentice-Hall.

Hughes B.O. & Elson H.A. 1977. The use of perches by broilers in floor pens. *British Poultry Science* 18: 715-722.

Hurwitz S., Sklan D., and Bartov I. 1978. New formal approach to the determination of energy and amino acid requirements of chicks. *Poultry Science* 57: 197-205.

Ingelaat F. 1997. Nieuwe kostprijsschema's voor de kuikenvleessector. *Pluimveehouderij* 27: 9-11.

Kirkwood J.K., and Webster J.F. 1984. Energy-budget strategies for growth in mammals and birds. *Animal Production* 38: 147-55.

Klein Wolterink H. & Meijerhof R. 1989. Dierweegsysteem geschikt voor opfok. *Pluimveehouderij* 19:16-17.

Ljung L. 1987. *System identification. Theory for the user.* New Jersey: Prentice Hall.

Moore A.J. 1985. A mathematical equation for animal growth from embryo to adult. *Animal Production* 40: 441-53.

Newberry R.C., Hunt J.R. & Gardiner E.E. 1985. Behaviour of roaster chickens towards an automatic weighing perch. *British Poultry Science* 26: 229-237.

Oltjen J.W., Bywater A.C., and Baldwin R.L. 1986. Evaluation of a model of beef cattle growth and composition. *Journal of Animal Science* 62: 98-108.

Oltjen J.W., and Owens F.N. 1987. Beef cattle feed intake and growth: empirical bayes derivation of the kalman filter applied to a nonlinear dynamic model. *Journal of Animal Science* 65: 1362-70.

Parkhurst R.T. 1967. *Commercial broiler production.* Washington: Government Printing Office.

Parks J. 1982. *A theory of feeding and growth in animals*. Berlin: Springer-Verlag.

Timmons M.B., and Gates R.S. 1988. Energetic model of production characteristics for tom turkeys. *Transactions of the ASAE* 31(5): 1544-51.

Xin H., DeShazer J.A., Feddes J.J.R., and Rajurkar K.P. 1992. Data dependent systems analysis of stochastic swine energetic responses. *Journal of Thermal Biology* 17(4/5): 225-34.

Young P.C. 1984. *Recursive estimation and time-series analysis*. Berlin: Springer-Verlag.

## Claims

1. Method for monitoring and controlling bio-response of living organisms on the basis of a model of the bio-response of said living organisms and measured, real-time information on bioprocess (3) inputs ($u_i(t)$) and outputs ($y(t)$), **characterised in that** the model (15) is generated on-line, based on the real-time information on bioprocess inputs and outputs, using a data based on-line modelling technique.

2. Method according to claim 1, wherein animal production of biomass is monitored and/or controlled.

3. Method according to claim 1 or 2, wherein the real-time information on the bio-process inputs is collected by measuring one or a selection from the following group of animal production inputs: nutritional inputs, such as feed quantity, feed composition, feeding strategy and/or micro-environmental inputs, such as temperature, humidity, ventilation, light intensity.

4. Method according to any one of the preceding claims, wherein the real-time information on the bio-process (3) outputs ($y(t)$) is collected by measuring one or a selection from the following group of animal production outputs: biomass production such as animal weight, egg mass, milk yield and/or biomass composition, such as meat/fat ratio, meat quality, milk quality, carcass composition and/or waste production, such as manure production, manure composition, ammonia emission.

5. Method according to any one of claims 2-4, wherein controlling a body weight trajectory of animals is monitored and/or controlled, using real-time information on animal production inputs and outputs.

6. Method according to any one of claims 2-5, wherein the real-time information on animal production inputs is obtained by measuring data on feed uptake.

7. Method according to any one of the claims 2-6, wherein the real-time information on animal production outputs is obtained by measuring animal weight.

8. Method according to any one of claims 2-7, furthermore comprising the step of adjusting one or more animal production inputs, in order to guide one or more monitored animal production outputs towards a desired output trajectory.

**9.** Method according to any one of the claims 2-8, wherein the on-line generated model (15) is used for predicting future animal production output of an individual animal or a group of animals.

**10.** Method according to any one of the claims 2-9, wherein the average body weight of a group of animals is determined.

**11.** Method according to claim 9 or 10, wherein the animals are birds, fish or mammals.

**12.** Method according to claim 11, wherein an automatic weighing system is used for on-line measuring of animal production output, in particular body weight.

**13.** Method according to claim 12, wherein a bias due to more frequent visit of the weighing system by lighter animals than by heavier animals is corrected by comparing the measured average weight with the predicted average weight.

**14.** Method according to any one of the claims 11-13, wherein video imaging techniques are used for on-line measuring of the animal production output, in particular the body weight.

**15.** Method according to any one of the claims 2-14, wherein the on-line modelling technique for controlling bio-response of animals is based on estimators.

**16.** Method for controlling animal well-being by the steps of:

- predicting a future difference between a desired animal status (20) and a predicted animal status using an on-line estimated model (15);
- changing input parameters ($u_i(t)$) to said animal based on said model (15) for minimising said future difference.

**17.** Use of a method according to anyone of claims 1-16 in monitoring and/or directing animal production or animal well being towards a desired output value or trajectory (20).

**18.** System for monitoring and controlling bio-response of living organisms according to any one of claims 1-15 comprising means (7) for collecting and storing real-time information on bio-process (3) inputs ($u_i(t)$) and outputs (y (t)), means (10, 14) for on-line modelling and generating a predicted bio-process (3) on the basis of said information, means (10, 16) for comparing and determining the variance between the predicted bio-response and the preset reference bio-response (20) and means (5, 18) for adjusting the bio-process inputs ($u_i(t)$) in relationship to the variance.

**19.** System according to claim 18, for controlling animal-well being according to claim 16.

**20.** System according to claim 18, for adjusting animal production inputs ($u_i(t)$) in order to guide a weight trajectory of animals towards a preset reference weight trajectory (20).

**21.** System according to any one of claims 18-20, wherein the means (10, 14) for on-line modelling, and preferably means (10, 16) for generating a control action (18) based on said on-line model (15) are contained on a chip, for attachment to an animal, together with one or more measurement means (7) for measuring the animal production inputs ($u_i(t)$) and outputs (y(t)) and communication means, for communicating the on-line model (15) and/or the generated control action (18) from the chip to means (5), with which the animal production inputs can be adjusted.

**22.** Chip, comprising means (10, 14) for generating an on-line model (15) of a bio-process (3) on the basis of real-time information on inputs ($u_i(t)$) and outputs (y(t)) of said bio-process (3), and preferably means (10, 16) for generating a control action (18) based on said on-line model (15).

**Patentansprüche**

**1.** Verfahren zur Überwachung und Steuerung der biologischen Reaktion von lebenden Organismen auf der Grundlage eines Modells der biologischen Reaktion der lebenden Organismen und gemessener Echtzeitinformationen über Eingaben ($u_i(t)$) und Ausgaben ($y(t)$) des Bioprozesses (3), **dadurch gekennzeichnet, dass** das Modell (15) basierend auf den Echtzeitinformationen über Bioprozesseingaben und - ausgaben unter Verwendung eines datenbasierten Online-Modellierungsverfahrens online generiert wird.

**2.** Verfahren nach Anspruch 1, **dadurch gekennzeichnet, dass** die tierische Biomasseproduktion überwacht und/ oder gesteuert wird.

**3.** Verfahren nach Anspruch 1 oder 2, **dadurch gekennzeichnet, dass** die Echtzeitinformationen über die Bioprozesseingaben durch Messen einer oder einer Auswahl aus der folgenden Gruppe von Tierproduktionseingaben: Ernährungseingaben wie etwa Futtermenge, Futterzusammensetzung, Fütterungsstrategie und/oder Mikro-Umgebungseingaben wie etwa Temperatur, Feuchtigkeit, Lüftung, Lichtintensität gesammelt werden.

**4.** Verfahren nach einem der vorhergehenden Ansprüche, **dadurch gekennzeichnet, dass** die Echtzeitinformationen über die Ausgaben ($y(t)$) des Bioprozesses (3) durch Messen einer oder einer Auswahl aus der folgenden Gruppe von Tierproduktionsausgaben: Biomasseproduktion wie etwa Tiergewicht, Eiermasse, Milchertrag und/ oder Biomassezusammensetzung wie etwa Fleisch-/Fettverhältnis, Fleischqualität, Milchqualität, Schlachtkörperzusammensetzung und/oder Abfallproduktion wie etwa Dungproduktion, Dungzusammensetzung, Ammoniakemission gesammelt werden.

**5.** Verfahren nach einem der Ansprüche 2 - 4, **dadurch gekennzeichnet, dass** die Steuerung einer Körpergewichtstrajektorie von Tieren unter Verwendung von Echtzeitinformationen über Tierproduktionseingaben und -ausgaben überwacht und/oder gesteuert wird.

**6.** Verfahren nach einem der Ansprüche 2 - 5, **dadurch gekennzeichnet, dass** die Echtzeitinformationen über Tierproduktionseingaben durch Messen von Daten über die Futteraufnahme gewonnen werden.

**7.** Verfahren nach einem der Ansprüche 2 - 6, **dadurch gekennzeichnet, dass** die Echtzeltinformationen über Tierproduktionsausgaben durch Messen des Tiergewichts gewonnen werden.

**8.** Verfahren nach einem der Ansprüche 2 - 7, das darüber hinaus den Schritt des Regulierens einer oder mehrerer Tierproduktionseingaben umfasst, um eine oder mehrere überwachte Tierproduktionsausgaben In Richtung auf eine gewünschte Ausgabetrajektorie zu lenken.

**9.** Verfahren nach einem der Ansprüche 2 - 8, **dadurch gekennzeichnet, dass** das online generierte Modell (15) zum Vorhersagen der zukünftigen Tierproduktionsausgaben eines einzelnen Tieres oder einer Gruppe von Tieren verwendet wird.

**10.** Verfahren nach einem der Ansprüche 2 - 9, **dadurch gekennzeichnet, dass** das durchschnittliche Körpergewicht einer Gruppe von Tieren bestimmt wird.

**11.** Verfahren nach Anspruch 9 oder 10, **dadurch gekennzeichnet, dass** die Tiere Vögel, Fische oder Säugetiere sind.

**12.** Verfahren nach Anspruch 11, **dadurch gekennzeichnet, dass** ein automatisches Wägesystem zur Online-Messung von Tierproduktionsausgaben, insbesondere des Körpergewichts, verwendet wird.

**13.** Verfahren nach Anspruch 12, **dadurch gekennzeichnet, dass** ein systematischer Fehler infolge des häufigeren Besuchs des Wägesystems durch leichtere Tiere als durch schwerere Tiere durch Vergleichen des gemessenen Durchschnittsgewichts mit dem vorhergesagten Durchschnittsgewicht korrigiert wird.

**14.** Verfahren nach einem der Ansprüche 11 - 13, **dadurch gekennzeichnet, dass** Videoabbildungsverfahren zur Online-Messung der Tierproduktionsausgaben, insbesondere des Körpergewichts, verwendet werden.

**15.** Verfahren nach einem der Ansprüche 2 - 14, **dadurch gekennzeichnet, dass** das Online-Modellierungsverfahren zur Steuerung der biologischen Reaktion von Tieren auf Schätzfunktionen basiert.

**16.** Verfahren zur Steuerung des tierischen Wohlergehens durch die Schritte des:

Vorhersagens einer zukünftigen Differenz zwischen einem gewünschten Tierzustand (20) und einem vorhergesagten Tierzustand unter Verwendung eines online geschätzten Modells (15);

Abänderns von Eingabeparametem ($u_i(t)$) auf das Tier basierend auf dem Modell (16) zur Minimierung der zukünftigen Differenz.

**17.** Verwendung eines Verfahrens nach einem der Ansprüche 1 - 16 bei der Überwachung und/oder Lenkung der Tierproduktion oder des tierischen Wohlergehens in Richtung auf einen gewünschten Ausgabewert oder eine gewünschte Ausgabetrajektorie (20).

**18.** System zur Überwachung und Steuerung der biologischen Reaktion von lebenden Organismen nach einem der Ansprüche 1 - 15, das Mittel (7) zum Sammeln und Speichern von Echtzeitinformationen über Eingaben ($u_i(t)$) und Ausgaben ($y(t)$) des Bioprozesses (3), Mittel (10,14) zum Online-Modellieren und Generieren eines vorhergesagten Bioprozesses (3) auf der Grundlage der Informationen, Mittel (10, 16) zum Vergleichen und Bestimmen der Varianz zwischen der vorhergesagten biologischen Reaktion und der vorgegebenen biologischen Bezugsreaktion (20) und Mittel (5, 18) zum Regulieren der Bloprozesseingaben ($u_i(t)$) im Verhältnis zur Varianz umfasst.

**19.** System nach Anspruch 18 zum Steuern des tierischen Wohlergehens nach Anspruch 16.

**20.** System nach Anspruch 18 zum Regulieren von Tierproduktionseingaben ($u_i(t)$), um eine Gewichtstrajektorie von Tieren in Richtung auf eine vorgegebene Bezugsgewichtstrajektorie (20) zu lenken.

**21.** System nach einem der Ansprüche 18 - 20, **dadurch gekennzeichnet, dass** die Mittel (10, 14) zum Online-Modellieren und vorzugsweise Mittel (10, 16) zum Generieren eines Steuerungsvorganges (18) basierend auf dem Online-Modell (15) auf einem Chip zur Anbringung an einem Tier zusammen mit einem oder mehreren Messmitteln (7) zum Messen der Tierproduktionseingaben ($u_i(t)$) und -ausgaben ($y(t)$) und Kommunikationsmitteln zum Übermitteln des Online-Modells (15) und/oder des generierten Steuerungsvorganges (18) von dem Chip zu den Mitteln (5), mit denen die Tierproduktionseingaben reguliert werden können, bereitgestellt werden.

**22.** Chip, der Mittel (10, 14) zum Generieren eines Online-Modells (15) eines Bioprozesses (3) auf der Grundlage von Echtzeitinformationen über Eingaben ($u_i(t)$) und Ausgaben ($y(t)$) des Bioprozesses (3) und vorzugsweise Mittel (10, 16) zum Generieren eines Steuerungsvorganges (18) basierend auf dem Online-Modell (16) umfasst.

**Revendications**

**1.** Procédé pour la surveillance et le contrôle de la réponse biologique d'organismes vivants sur la base d'un modèle de la réponse biologique desdits organismes vivants et des informations en temps réel mesurées sur les entrées ($u_i(t)$) et les sorties ($y(t)$) du bio-procédé (3), **caractérisé en ce que** le modèle (15) est généré en ligne, sur la base des informations en temps réel sur les entrées et les sorties du bio-procédé, en utilisant les données basées sur la technique de modélisation en ligne.

**2.** Procédé selon la revendication 1, dans lequel la production animale de la biomasse est surveillée et/ou contrôlée.

**3.** Procédé selon la revendication 1 ou 2, dans lequel les informations en temps réel sur les entrées du bio-procédé sont collectées en mesurant un ou une sélection du groupe suivant des entrées de production animale : les entrées nutritionnelles telles que la quantité d'alimentation, la composition de l'alimentation, la stratégie de l'alimentation et/ou les entrées micro-environnementales telles que température, humidité, ventilation, intensité de la lumière.

**4.** Procédé selon l'une quelconque des revendications précédentes, dans lequel les informations en temps réel sur les sorties ($y(t)$) du bio-procédé (3) sont collectées en mesurant un ou une sélection du groupe suivant des sorties de production d'animale : production de biomasse telle que poids de l'animal, masse de l'oeuf, rendement de lait et/ou composition de biomasse, telle que rapport viande/gras, qualité de la viande, qualité du lait, composition de la carcasse et/ou production de fumier, telle que composition de fumier, émission d'ammoniac.

**5.** Procédé selon l'une quelconque des revendications 2 à 4, dans lequel le contrôle d'une trajectoire du poids d'un corps des animaux est surveillé et/ou contrôlé en utilisant les informations en temps réel sur les entrées et sorties de production animale.

**6.** Procédé selon l'une quelconque des revendications 2 à 5, dans lequel les informations en temps réel sur les entrées de production animale sont obtenues en mesurant les données sur l'alimentation.

**7.** Procédé selon l'une quelconque des revendications 2 à 6, dans lequel les informations en temps réel sur les sorties de production animale sont obtenues en mesurant le poids de l'animal.

**8.** Procédé selon l'une quelconque des revendications 2 à 7, comprenant, en outre, l'étape consistant à ajuster une ou plusieurs entrées de production animale, afin de guider une ou plusieurs sorties de production animale surveillée vers une trajectoire de sortie désirée.

**9.** Procédé selon l'une quelconque des revendications 2 à 8, dans lequel le modèle généré en ligne (15) est utilisé pour prédire la sortie de production animale future d'un animal individuel ou d'un groupe d'animaux.

**10.** Procédé selon l'une quelconque des revendications 2 à 9, dans lequel le poids moyen du corps d'un groupe d'animaux est déterminé.

**11.** Procédé selon la revendication 9 ou 10, dans lequel les animaux sont des oiseaux, des poissons ou des mammifères.

**12.** Procédé selon la revendication 11, dans lequel un système de pesage automatique est utilisé pour la mesure en ligne de la sortie de production animale, en particulier le poids du corps.

**13.** Procédé selon la revendication 12, dans lequel une déviation due à une visite plus fréquente du système de pesage par des animaux plus légers que par des animaux plus lourds est corrigée en comparant le poids mesuré au poids moyen prédit.

**14.** Procédé selon l'une quelconque des revendications 11 à 13, dans lequel des techniques de formation d'image vidéo sont utilisées pour la mesure en ligne de la sortie de production animale, en particulier le poids du corps.

**15.** Procédé selon l'une quelconque des revendications 2 à 14, dans lequel la technique de modélisation en ligne pour contrôler la réponse biologique des animaux est basée sur des estimateurs.

**16.** Procédé pour contrôler le bien-être des animaux par les étapes consistant à :

- prédire une différence future entre un état d'animal désiré (20) et un état d'animal prédit en utilisant un modèle estimé en ligne (15) ;

- changer les paramètres d'entrée ($u_i(t)$) dudit animal sur la base dudit modèle (15) pour minimiser ladite différence future.

**17.** Utilisation d'un procédé selon l'une quelconque des revendications 1 à 16 dont la surveillance et/ou la direction de la production d'animale ou du bien-être d'animal vers une valeur ou une trajectoire de sortie désirée (20).

**18.** Système pour la surveillance et le contrôle de la réponse biologique d'organigrammes vivants selon l'une quelconque des revendications 1 à 15, comprenant un moyen (7) pour collecter et mémoriser les informations en temps réel sur les entrées ($u_i(t)$) et les sorties ($y(t)$) du bio-procédé (3), un moyen (10, 14) pour la modélisation en ligne et pour la génération d'un bio-procédé prédit (3) sur la base desdites informations, un moyen (10, 16) pour la comparaison et la détermination de la variance entre la réponse biologique prédite et la réponse biologique de référence préétablie (20) et un moyen (5, 18) pour ajuster les entrées ($u_i(t)$) du bio-procédé en liaison avec la variance.

**19.** Système selon la revendication 18 pour contrôler le bien-être étant selon la revendication 16.

**20.** Système selon la revendication 18, pour ajuster les entrées de production animale ($u_i(t)$ afin de guider une trajectoire de poids des animaux vers une trajectoire de poids de référence préétablie (20).

**21.** Système selon l'une quelconque des revendications 18 à 20, dans lequel le moyen (10, 14) pour la modélisation en ligne, et, de préférence, le moyen (10, 16) pour générer une action de contrôle (18) basée sur ledit modèle en ligne (15) sont contenus sur une puce, pour fixation à un animal associé à un ou plusieurs moyens de mesure (7) pour la mesure des entrées ($u_i$(t)) et des sorties (y(t)) de production d'animaux et un moyen de communication, pour communiquer le modèle en ligne (15) et/ou l'action de contrôle généré (18) à partir de la puce au moyen (5), avec lequel les entrées de production animale peuvent être ajustées.

22. Puce, comprenant un moyen (10, 14) pour générer un modèle en ligne (15) d'un bio-procédé (3) sur la base des informations en temps réel des entrées ($u_i$(t)) et des sorties (y(t)) dudit bio-procédé (3), et, de préférence, un moyen (10, 16) pour générer une action de contrôle (18) sur la base dudit modèle en ligne (15).

**Fig. 1**

**Fig. 2**

Fig. 3

Fig. 4

| Animal species | Bioprocess inputs | Bioprocess outputs | Measuring technique |
|---|---|---|---|
| BROILERS | Feed supply<br>Feed composition<br>Temperature<br>Light intensity | Bird weight | Automatic weighing platform (eg. Fancom F47 bird weighing system) |
| Fattening pigs | Feed supply<br>Feed composition<br>Temperature | Pig weight | Video Image Analysis (eg. GRACE-system developed by Silsoe Research Institute) |
| Fish | Feed supply<br>Feed distribution | Fish weight<br>r | Video Image Analysis (eg. Petrell et al., 1997) |
| Bovine animal | Concentrate supply<br>Roughage supply | Animal weight | Weighing platform<br>Image analysis |
| Milking cow | CONCENTRATE SUPPLY<br>Roughage supply | Milk yield | Electronic milk yield sensor (eg. DeLaval milk meter MM25) |
| Laying hens | Feed supply<br>Feed composition<br>Temperature<br>Light intensity | Total egg mass production | Electronic egg counter (eg. Fancom IR.10 egg counter) |

Table 1

Fig. 5